# NEUE EUROPÄISCHE PATENTSCHRIFT

(11) **EP 1 188 783 B2**
(45) Veröffentlichungstag und Bekanntmachung des Hinweises auf die Entscheidung über den Einspruch: **17.04.2013**
(45) Hinweis auf die Patenterteilung: 31.03.2004
(21) Anmeldenummer: 01120528.3
(22) Anmeldetag: 29.08.2001
(51) Int. Cl.: C08G 63/78, C08G 63/183, C08G 63/85, C08G 63/90

(54) **Verfahren zur Herstellung von Polyestern mit reduziertem Gehalt an freiem Acetaldehyd**
Process for the preparation of polyesters having reduced content of free acetaldehyde
Procédé pour la préparation de polyesters ayant une teneur en acétaldéhyde réduite

(30) Priorität: 15.09.2000 DE 10045719
(43) Veröffentlichungstag der Anmeldung: 20.03.2002
(73) Patentinhaber: Uhde Inventa-Fischer GmbH, 13509 Berlin (DE)
(72) Erfinder: Schaaf, Eckehart, Dr., 14513 Teltow (DE); Rafler, Gerald, Dr., 14473 Potsdam (DE); Hagen, Rainer, Dr., 13465 Berlin (DE)
(74) Vertreter: Pfenning, Meinig & Partner GbR

(56) Entgegenhaltungen:
- EP-A2- 0 719 582
- WO-A1-96/37534
- WO-A1-97/28218
- WO-A1-98/41381
- WO-A1-98/41559
- DE-A1- 19 503 053
- US-A- 3 499 873
- US-A- 4 837 115
- US-A- 5 340 884
- US-A- 5 648 032
- US-A- 5 656 221
- US-A- 5 898 058
- US-A- 6 013 756
- US-A- 6 099 778
- MOORE, W.R. ET AL: 'Viscosities of dilute solutions of polyethylene terephthalate' POLYMER 9 Bd. 7, Nr. 3, 1968, Seiten 153 - 158
- BUXBAUM, L.H., Bd. 7, 1968, ANGEW. CHEM. INTERNAT. EDIT. vol. 'The degradation of poly(ethylene terephthalate)'
- GRASSIE, N.: 'Developments in polymer degradation', APPLIED SCIENCE PUBLISHERS, LONDON, NEW YORK Seiten 79 - 119

## Beschreibung

Die Erfindung betrifft ein Verfahren zur Herstellung von Polyestern mit reduziertem Gehalt an freiem Acetaldehyd aus Terephthalsäure und Ethylenglykol über eine katalysierte Polykondensation in der Schmelze sowie die Verwendung dieses Verfahrens.

Polyester aus Dicarbonsäuren und Diolen, insbesondere solche vom Typ des Polyethylenterephthalats und dessen Copolyester mit anderen Dicarbonsäuren und Alkylenglykolen sowie höherwertigen Polycarbonsäuren und Polyolen, werden in erheblichem Umfang zur Herstellung von Behältern und Flaschen für Nahrungsmittel und Getränke verwendet.

Deswegen sind die Anlagenkapazitäten zur Herstellung solcher Polyestergranulattypen enorm angestiegen. Mit großen Anlagen kann Polyester preisgünstiger als bisher erzeugt werden. Die Konkurrenz der Hersteller drückt die Preise. Andererseits wiederum stimuliert das die Entwicklung neuer Anwendungsmöglichkeiten und verdrängt andere Materialien wie PVC. Verpackungs-Polyester ist damit zu einem Massenprodukt geworden mit dessen Herstellung und Verkauf nur noch geringe Margen realisiert werden können. Unter diesen Umständen ist für die Hersteller von Verpackungs-Polyestern jede Verbesserung oder Vereinfachung des Produktionsprozesses interessant, die die Margen erhöht.

Eine solche Vereinfachung des Herstellungsprozesses besteht darin, dass der Polyester mit einer für Verpackungszwecke notwendigen mittleren Molmasse, gemessen über die intrinsische Lösungsviskosität (IV), durch Polykondensation in der Schmelze erzeugt wird. Die intrinsische Viskosität wird dabei nach A. Horbach in Phenol/Dichlorbenzol (1:1) bei 25 °C gemessen (s. A. Horbach, R. Binsack, H. Müller, Angew. Makromol. Chem. 98 (1981) 35-48). Damit entfällt der heute ausnahmslos notwendige Schritt der Festphasennachpolykondensation. Dieser Schritt ist mit erheblichem Aufwand an Apparaten und Energie verbunden: zunächst wird die Polyesterschmelze in ein amorphes Granulat überführt. Dieses Granulat muss wieder aufgeheizt und durch Kristallisation in mindestens zwei, genau nach Temperatur und Verweilzeit gesteuerten Stufen für die nachfolgende Festphasennachpolykondensation (SSP) aufbereitet werden. Ohne diese aufwendige Vorbereitung kommt es in der SSP zum Verbacken oder Verkleben des Granulats, das Produktionsunterbrechung, Instandsetzungsarbeiten und Produktverlust bedeutet. Die eigentliche SSP benötigt Verweilzeiten zwischen etwa 6 und 15 Stunden sowie eine Spülung mit Inertgas, das aus wirtschaftlichen Gründen nach Gebrauch aufbereitet und in den Prozess zurückgeführt werden muss. Das hat große Reaktorabmessungen sowie eine ganze Anzahl von Nebenapparaten und -aggregaten für die Gasreinigung und -aufbereitung mit entsprechendem Energiebedarf zur Folge.

Besonders hervorzuheben ist der Platzbedarf und die Gebäudehöhe. Hinzu kommt zusätzlicher Aufwand für die Feststoffzufuhr, -dosierung und -abfuhr und dafür, dass die SSP und die Gasaufbereitung unter hoher Temperatur und Ausschluss von Luftsauerstoff durchzuführen sind.

Dieser große Aufwand an Apparaten und Energie entfällt, wenn die Polykondensation bis zur erforderlichen Molmasse in der Schmelze durchgeführt wird. Bei den genannten Molmassen handelt es sich um das Zahlenmittel Mₙ, das aus der IV nach Horbach et al. (s. obige Literaturstelle) bestimmt wurde. Bislang ist nach dem Stand der Technik in der Endstufe der Polykondensation in der Schmelze ein Molmassenaufbau ausgehend von ca. 6.000 g/mol auf ca. 20.000 g/mol möglich. Eine Ausdehnung auf höhere Molekularmassen von 25.000 g/mol bis 35.000 g/mol, maximal 40.000 g/mol hat man bisher aus zwei Gründen nicht in Betracht gezogen:
1. Es standen keine Endreaktoren zur Verfügung, mit denen höhere Molekularmassen von 25.000 g/mol bis 35.000 g/mol, maximal 40.000 g/mol erzielt werden konnten und dabei noch eine akzeptable Produktqualität gemessen an Farbe, freiem Acetaldehyd und Gehalt an Vinylesterendgruppen (ein Maß für die thermische Schädigung und für das Potential zur Neubildung von Acetaldehyd bei der Weiterverarbeitung z.B. zu Flaschen) liefern konnten.
2. Nur die SSP war in der Lage, ein Polyestergranulat zu erzeugen, das die für die Verarbeitung zu Getränkeflaschen notwendige niedrige Konzentration an freiem Acetaldehyd (AA) hatte und eine geringe AA-Neubildung während der Verarbeitung des Granulats zu Flaschen (Spritzguss, Streckblasen) aufwies.

Inzwischen ist die Entwicklung von "DISCAGE"-Endreaktoren der Firma Inventa-Fischer soweit fortgeschritten, dass der erste Grund nicht mehr die entscheidende Rolle spielt. Hierbei wird Bezug auf die EP 0 719 582 genommen und der hier beschriebenen Reaktortyp mit sämtlichen Ausstaltungsvarianten in diese Anmeldung einbezogen.

Es ist damit möglich, Farbe, AA und Konzentration an Vinylesterendgruppen auf einem Niveau zu halten, das den Einsatz von AA-bindenden Zusatzstoffen sinnvoll macht. Außerdem ist es möglich geworden, den erforderlichen Molmassenanstieg mit einem einzigen Endreaktor zu erreichen. Durch Verwendung von zwei hintereinandergeschalteten Endreaktoren könnte man zwar den Molmassenanstieg leichter erzielen, man müsste aber die Nachteile einer längeren Verweilzeit in der Schmelze (und damit erhöhter Bildung von Farbe, AA und Vinylestergruppen) sowie den größeren Aufwand an Apparaten hinnehmen.

Polyester werden nach dem Stand der Technik durch Schmelzepolykondensation aus niedermolekularen Estern der Dicarbonsäuren mit Alkylendiolen bei erhöhten Temperaturen unter Abspaltung von Wasser und Alkandiolen hergestellt. Die Abspaltung der flüchtigen Produkte der Polykondensation wird durch Anlegen von Vakuum und eine intensive Durchmischung der Schmelze vorangetrieben. Durch den Zusatz spezieller Katalysatoren, insbesondere Metallverbindungen wie Antimontrioxid, wird die Polykondensation beschleunigt und das Erreichen hoher Molmassen ermöglicht, wie sie für die Herstellung dieser Behälter erforderlich sind.

Die hohen Temperaturen während der Herstellung und Verarbeitung der Schmelze sind Ursache für Zersetzungsreaktionen der Polyester, die über mehrere Schritte zur Freisetzung von Acetaldehyd führen, der in der Schmelze verbleibt und nach der Verarbeitung zu Behältern und Flaschen aus diesen allmählich austritt, in die abgefüllten Nahrungsmittel und Getränke diffundiert und deren Geruch und Geschmack nachteilig beeinflusst.

Der thermische Abbau der Polyester und damit die Bildung von Acetaldehyd wird aber auch durch die bekannten Polykondensationskatalysatoren begünstigt. Sie haben alle eine begrenzte Selektivität, d.h. sie katalysieren nicht nur den Molmassenaufbau (Kettenverlängerung), sondern - in unterschiedlichem Maße - auch den Molmassenabbau durch thermische Esterspaltung.

Der bisher fast ausschliesslich verwendete Weg zur Herstellung umfasst die Polykondensation der Rohstoffe Terephthalsäure und Ethylenglykol (mit Zusätzen kleinerer Mengen an Comonomeren wie Isophthalsäure, Diethylenglykol oder Cyclohexamethylendiol zur Verbesserung der Verarbeitungseigenschaften in der Schmelze bis zu einer mittleren Molmasse von etwa 20.000 g/mol (IV 0,63). Für die weitere Erhöhung der mittleren Molmasse auf für Verpackungszwecke notwendige Werte zwischen 25.000 und 30.000, max. 40.000 g/mol verwendet man heute ausschließlich die Festphasennachpolykondensation.

Hierzu wird Polyesterschmelze nach Erreichen einer mittleren Molmasse von etwa 20.000, die noch nicht für die Herstellung von Flaschen ausreicht, in ein festes Granulat überführt. Anschließend wird dieses Granulat in einer Festphasenpolykondensation bei Temperaturen unterhalb des Schmelzpunkts weiter kondensiert bis die erforderliche mittlere Molmasse erreicht ist.

Die Festphasenpolykondensation bietet den Vorteil, dass bei den niedrigeren Temperaturen die oben erwähnten Abbaureaktionen nicht oder in nur stark verringertem Maße ablaufen und dass darüber hinaus bereits vorhandenes Acetaldehyd unter den Bedingungen der Festphasenpolykondensation aus den Granulatkörnern austritt und entfernt wird. Auf diesem Wege wird ein hochmolekulares Polyestergranulat mit einem Acetaldehydgehalt unter 3 ppm und bis unter 1 ppm, erhalten, das für die Weiterverarbeitung zu Behältern und Flaschen eingesetzt wird. Die Weiterverarbeitung des hochmolekularen und von Acetaledhyd weitgehend befreiten Polyestergranulats erfolgt nach dem derzeitigen Stand der Technik in der Weise, dass das Granulat, nach Trocknung auf eine Restfeuchte von weniger als 50 ppm, aufgeschmolzen wird und zu so genannten Vorformlingen verformt wird, die dann in einem weiteren Arbeitsgang zu Flaschen geblasen werden. Beim Aufschmelzen des Granulats und in den Schmelzekanälen zu den Spritzgussformen erfolgt jedoch eine erneute thermische Belastung des Materials, die zur erneuten Freisetzung von Acetaldehyd führt und die erwähnten Beeinträchtigungen der Produkte hervorruft.

Darüber hinaus ist die Durchführung der Festphasenpolykondensation technisch aufwendig und erfordert lange Verweilzeiten in den Reaktoren.

Die direkte Herstellung, d.h. ohne Durchführung einer Festphasenpolykondensation hochmolekularer Polyestergranulate mit einem niedrigen Gehalt an Acetaldehyd aus der Polyesterschmelze ist aus dem US-Patent US 5,656,719 bekannt, nach dem die Polyesterschmelze durch Einleiten eines Inertgases in die Schmelze und anschließende Entgasung von Acetaldehyd befreit wird. Der Nachteil liegt darin, daß eine Entgasung der Polyesterschmelze hohe Anforderungen an die apparativen Voraussetzungen stellt und eine großtechnische Umsetzung dieses Verfahrens nicht realisierbar ist.

Einen anderen Lösungsansatz lehrt die US 4,837,115 durch den Zusatz eines Polyamids zum Polyester. Der Zusatz von Polyamiden hat dabei jedoch den Nachteil, daß diese mit den Polyestern nicht mischbar sind und zu einer Eintrübung des Polyesters führen, wodurch die Klarheit und Transparenz des Verarbeitungsproduktes (z.B. Flasche) stark beeinträchtigt wird. Gleichzeitig führt der thermische Abbau der Polyamide zu deutlichen Verfärbungen in der Matrix.

In der US 5,656,221 und US 5,258,233 wird die Kombination dieser beiden Verfahrenswege, der Zusatz von Polyamiden und die Entgasung der Polyesterschmelze, beschrieben. Auch hier treten jedoch die bereits erwähnten Nachteile im gleichen Maße auf.

Vor diesem Hintergrund war es Aufgabe der Erfindung ein Verfahren zur Herstellung eines hochmolekularen Polyestergranulats für die Herstellung von Behältern für Nahrungsmittel und Getränke mit einem niedrigen Gehalt an Acetaldehyd im Endprodukt ohne Verwendung der Festphasennachkondensation (SSP) sowie aufwendiger Entgasungsapparaturen herzustellen.

Die Aufgabe wird durch ein gattungsgemäßes Verfahren mit den Merkmalen des Patentanspruchs 1 gelöst. Unteransprüche 2 bis 28 geben vorteilhafte Weiterbildungen des Verfahrens an.

Die Verwendung des erfindungsgemäßen Verfahrens ist durch die kennzeichnenden Merkmale der Patentansprüche 29 bis 31 charakterisiert.

Diese Aufgabe wird durch ein Verfahren gelöst, bei dem die Schmelze bis zu einer Molmasse polykondensiert wird, die zur Herstellung dieser Produkte ausreicht. Die Polykondensation in der Schmelze wird dabei unter Bedingungen durchgeführt, bei denen besonders wenig Acetaldehyd entsteht. Hierzu zählt die Verwendung hochaktiver Katalysatoren in niedriger Dosierung und deren Deaktivierung mit Inhibitoren, sobald die erforderliche Molmasse des Polyesters, die über die intrinsische Viskosität (IV) bestimmt wird, erreicht ist. Im Falle dass die mit diesen Maßnahmen erreichbare Restkonzentration an Acetaldehyd im Vorformling noch zu hoch ist, werden der Schmelze nach Erreichen der erforderlichen Molmasse Substanzen zugesetzt, die mit dem vorhandenen und dem sich während der Verarbeitung bildenden Acetaldehyd eine chemische oder physikalische Bindung eingehen und so die nachteilige Wirkung auf Geruch und Geschmack unterbinden. Die Polykondensation wird dabei bei Temperaturen unterhalb von 280 °C gehalten.

Hintergrund dieser Maßnahmen ist folgender:
a) Verwendung eines hochaktiven Katalysators in niedriger Konzentration:
   Der Polykondensationskatalysator beeinflußt die Temperatur und die Verweilzeit, die zum Erreichen einer gewünschten Molmasse nötig ist. Andererseits katalysiert er neben der Polykondensation auch unvermeidlich den thermischen Abbau. Diese Zusammenhänge werden in der Regel bei industriellen Polykondensationsprozessen genutzt, um thermisch stabile Polyester zu erzeugen. Besondere Bedeutung kommt hier der hohen Aktivität des Katalysators bei vergleichsweise niedrigen Temperaturen der reagierenden Schmelze zu. Der in der großtechnischen Produktion bisher ausschließlich verwendete Antimonkatalysator stellt einen Kompromiß zwischen Reaktivität und Selektivität dar. Hochaktive Katalysatoren wie Verbindungen des Titan (IV) erlauben durch Wahl niedriger Dosierung und niedriger Reaktionstemperaturen bessere Kompromisse in Bezug auf den Molmassenaufbau und den thermischen Abbau.
b) Inhibierung des Polykondensationskatalysators nach Erreichen der gewünschten Molmasse:
   Während der Polykondensation in der Schmelze kommt es darauf an, daß der Katalysator durch zugesetzte Stabilisatoren nicht inhibiert wird. Sobald jedoch die gewünschte Molmasse erreicht ist, ist seine Aufgabe erfüllt und seine weitere Aktivität besteht nur noch in der Katalyse unerwünschter Reaktionen wie der thermischen Esterspaltung und Produktion von Acetaldehyd und Vinylestergruppen. Ein Merkmal der vorliegenden Erfindung besteht darin, die weitere Produktion thermischer Abbauprodukte durch den Katalysator zu vermindern und damit einen thermisch stabileren Polyester herzustellen. Das geschieht dadurch, daß nach Erreichen der gewünschten Molmasse der Schmelze außer dem Acetaldehyd bindenden Additiv ein Stabilisator gegen den thermischen Abbau zugesetzt wird, z.B. können durch den Zusatz eines phosphorhaltigen Stabilisators Titan(IV)-Katalysatoren inhibiert werden. Als Stabilisatoren eignen sich alle Phosphorverbindungen, solange sie in Polyesterschmelze löslich sind oder mit diesen bei der hohen Schmelzeviskosität eine Reaktion eingehen, die zu einer homogenen Phase führt.
   Mit Hilfe dieser nachträglichen Stabilisierung kann man nicht nur den Titankatalysator inaktivieren, sondern bei Zugabe eines Überschusses auch alle Schwermetallspuren, die als Verunreinigung mit dem Rohstoff in den Polyester gelangen oder aus abrasiven oder korrosiven Vorgängen in der Polykondensationsanlage stammen. Bei der Bemessung der zugesetzten Stabilisatormenge muß man keine Rücksicht mehr nehmen auf deren inhibierende Wirkung auf den Katalysator, wie es bei Zusatz des Stabilisators vor oder während der Polykondensation der Fall ist.
c) Zusatz einer den Acetaldehyd bindenden Substanz:
   Um eine besonders niedrige Konzentration an Acetaldehyd im Vorformling einzustellen, wie sie z.B. zur Herstellung von Mineralwasserflaschen gefordert wird, ist der Zusatz von Acetaldehyd-bindenden Stoffen vorgesehen.
   Der Acetaldehyd bindende Zusatzstoff wird in einer Konzentration zugesetzt, die nicht nur den an der Einspeisestelle im Polyester schon vorhandenen freien Acetaldehyd bindet. Vielmehr wird im Verhältnis zu dieser freien Acetaldehyd-Konzentration ein gewisser Überschuß eingesetzt. Dieser Überschuß bindet den nach der Einspeisestelle in der Schmelze bis zur Granulierung noch entstehenden Acetaldehyd. Außerdem muß er den beim Wiederaufschmelzen und Spritzgießen neu gebildeten Acetaldehyd binden, damit im Vorformling weniger als 10 ppm, vorzugsweise weniger als 5 ppm vorliegen.

Aus dieser Darstellung wird klar, daß um so mehr des Acetaldehyd bindenden Additivs zugesetzt werden muß, je höher der Gehalt der Polyesterschmelze an freiem Acetaldehyd und Vinylesterendgruppen (der Vorstufe, aus der freier Acetaldehyd neu entstehen kann) an der Einspeisestelle ist. Die erfindungsgemäßen Zusatzstoffe sind, bezogen auf ihre Masse grundsätzlich teurer als der Polyester, dem sie zugemischt werden. Außerdem haben sie auch nachteilige Effekte auf den Polyester. Insbesondere ist das eine je nach Art der Verbindung schwächere oder stärkere Gelbfärbung des Produktes. Die Erfindung schließt deshalb eine möglichst geringe thermische Schädigung des Polyesters während der Polykondensation und bis zur Granulierung ein. Gegenstand der Erfindung ist außerdem, daß die Einspeisung des Acetaldehyd bindenden Additivs nach der Polykondensation in die Schmelze erfolgt. Unmittelbar nach der Polykondensation ist die Konzentration des freien Acetaldehyds in der Schmelze zwischen 1 und 10 ppm und damit sehr niedrig wegen des im Reaktor herrschenden Vakuums. Es hat sich als nicht wirkungsvoll herausgestellt, das Acetaldehyd bindende Additiv vor dem Endreaktor der Schmelze zuzusetzen. In diesem Falle sind davon Mengen zuzusetzen, die weit über 1 % liegen und somit weder wirtschaftlich noch von der Produktqualität her tragbar sind.

Eine Trübung im Endprodukt kann dadurch verhindert werden, daß das Acetaldehyd-bindende Amid in seiner Zusammensetzung und Molmasse so gewählt wird, daß der Brechungsindex des Amids gleich dem des Polyesters ist.

Die Quelle des freien und gebundenen Acetaldehyds ist der thermische Abbau des Polyesters. Chemisch handelt es sich um eine Esterspaltung, die durch hohe Temperaturen und lange Verweilzeiten begünstigt wird. Bei antimonkatalysierten Polyestern ist bekannt, daß die Aktivierungsenergie des thermischen Abbaus mit ca. 190 kJ/mol wesentlich höher ist als die der Polykondensation (55 kJ/mol). Jedes Grad Temperatursenkung während der Polykondensation wird demnach den thermischen Abbau wesentlich stärker reduzieren als die Polykondensationsgeschwindigkeit. Der Temperatursenkung sind jedoch Grenzen gesetzt, weil mit abnehmender Temperatur die Viskosität der Schmelze steigt. Hohe Viskosität bewirkt einen stärkeren thermischen Abbau in stagnierenden Schmelzebereichen (fehlende Durchmischung), insbesondere in der Nähe fester Wände. Die Überlagerung positiver und negativer Einflüsse führt zu einem Temperaturoptimum, das außer vom Katalysator auch noch von der Bauart des Polykondensationsreaktors abhängt. Die Endreaktoren der Bauart "Discage" haben sich als besonders geeignet erwiesen, auch bei so niedrigen Schmelzetemperaturen wie 270 °C noch eine ausreichende Polykondensationsgeschwindigkeit bei geringem thermischen Abbau aufrechtzuerhalten.

Die genannten Maßnahmen zur Senkung des Acetaldehydgehalts erlauben es, die erforderliche Menge dieser Zusatzstoffe auf eine Konzentration unter 1 Masse-% zu begrenzen. Dies ist aus wirtschaftlichen Gründen notwendig und weil diese Substanzen auch für das Produkt nachteilige Nebenwirkungen haben (Farbe, Verlust an Molmasse des Polyesters).

Vorzugsweise wird die Polykondensation bei einer Temperatur unterhalb von 275 °C durchgeführt.

Der Zusatz des Inhibitors erfolgt bevorzugt, wenn die intrinsische Viskosität (IV) der Polyesterschmelze zwischen 0,73 und 0,92 beträgt.

Vorzugsweise werden der Terephthalsäure eine weitere Dicarbonsäure, wie z.B. Isophthalsäure oder Adipinsäure, in einer Konzentration bis zu 10 Mol-% zugesetzt.

Es ist bevorzugt, neben Ethylenglykol weitere Alkandiole und/oder Polyole in einer Konzentration bis zu 5 Mol-% zuzusetzen.

Für die bislang nicht praktizierte Erzeugung von Polyestern in der Schmelze mit Molmassen bis 40.000 g/mol mit einem Minimum an thermischem Abbau (oder minimaler Acetaldehyd- und Vinylesterendgruppenkonzentration) hat sich eine besonders niedrige Dosierung des Titankatalysators unter 0,1 mmol/mol Dicarbonsäure als bevorzugt herausgestellt, wodurch ein thermisch besonders stabiler Polyester hergestellt werden kann. Der zusätzliche Einsatz von Kobalt, wie es in der EP 0 827 518 für die Herstellung von Prekursor-Polymeren mit einer mittleren Molmasse bis ca. 20.000 g/mol zum Austarieren der inhibierenden Wirkung der phosphorhaltigen Stabilisatoren gelehrt wird, ist hier nicht notwendig. Höchst bevorzugt ist es, die Konzentration des titanhaltigen Katalysators < 0,05 mmol/mol Dicarbonsäure zu wählen. In Polykondensationsversuchen stellte sich überraschenderweise heraus, daß 0,02 mmol/mol Titan/Dicarbonsäure noch bei 270 °C denselben katalytischen Effekt besitzen, wie 0,3 mmol/mol Antimon.

Bevorzugt sind als Katalysatoren titanhaltige Katalysatoren, und hier besonders organische Titan(IV)-Verbindungen.

Es hat sich als vorteilhaft erwiesen, als Inhibitor eine Phosphorverbindung einzusetzen, dabei besonders eine organische Phosphorverbindung. Dazu zählen viele Ester der Phosphorsäure und der phosphorigen Säure sowie der Phosphon- und phosphonigen Säure. Bevorzugt sind Phosphorverbindungen, die keine unangenehmen oder gar gefährlichen Spaltprodukte im Polyester hinterlassen und deren Spaltprodukte bei der Weiterverarbeitung leicht aus dem Granulat oder der Schmelze entweichen. Außerdem sollen sie beim Einmischen in die Schmelze keinen Kettenabbau und damit keinen Verlust an Molmasse verursachen.

Besonders geeignet in diesem Sinne sind Triethyloder Trimethylphosphat.

Geeignete Zugabeformen sind als Flüssigkeit oder als pulvriger Feststoff in reiner Form oder gemischt mit dem Acetaldehyd-bindenden Additiv.

Vorzugsweise wird eine Konzentration der organischen Phosphorverbindung von mindestens 1 mol/mol Ti-Verbindungen gewählt. Bisher war das Einmischen derart geringer Mengen an Phosphorstabilisatoren für die industrielle Polyesterherstellung nicht praktikabel aufgrund des aufwendigen Misch- und Homogenisierungsprozesses in der hochviskosen Schmelze. Im erfindungsgemäßen Verfahren kann dieser Mischvorgang jedoch mit dem Zusatz der Acetaldehyd bindenden Zusatzstoffe kombiniert werden, so daß dies keinen zusätzlichen Aufwand bedeutet.

Überraschend wurde gefunden, daß Polyester, die aus Terephthalsäure und Ethylenglykol bestehen und bis zu 5 Mol% andere Dicarbonsäuren wie Isophthalsäure, Adipinsäure und/oder andere Alkandiole wie Butylenglykol, Hexandiol enthalten, und die einen Gehalt an freiem Acetaldehyd bis zu 100 ppm aufweisen, nach intensiver Vermischung und Umsetzung mit einer monomeren oder niedermolekularen Verbindung aus einer Polycarbonsäure und dem Diamin eines aliphatischen oder aromatischen Kohlenwasserstoffs einen Gehalt an freiem Acetaldehyd von unter 10 ppm, vorzugsweise unter 5 ppm aufweisen.

Für den Zusatz von Acetaldehyd bindenden Substanzen haben sich besonders Amide aus Polycarbonsäuren mit mehrwertigen Aminen erwiesen, die mindestens zwei freie Aminogruppen enthalten. Besonders bevorzugt wählt man dabei Amide, die aus Dicarbonsäuren und Diaminen eines Kohlenwasserstoffs bestehen und vorzugsweise eine Molmasse unter 2000 g/mol haben. Es wurde festgestellt, daß diese Amide, wenn sie in geringen Mengen bis etwa 1 Masse-% einer Polyesterschmelze zugesetzt werden, im Gegensatz zu Polyamiden nach dem Stand der Technik zu einer besseren Transparenz und Klarheit der mit ihrer Hilfe hergestellte Produkte führen.

Geeignete Amide können durch Kondensationsreaktion aus den in Tab. 1 genannten Dicarbonsäuren und Diaminen hergestellt werden.

Ein weiteres geeignetes Amid kann dadurch hergestellt werden, dass man ein organisches Diamin, beispielsweise 1,3-Bis-(aminomethyl)-benzol mit Polyesterschmelze bei einer Temperatur zwischen 265 und 290 °C im Massenverhältnis 1:20 bis 1:200 vermischt. Das Reaktionsprodukt kann abgekühlt und granuliert werden und das Granulat kann nach Trocknung als Acetaldehyd bindendes Additiv einer Polyesterschmelze mit einer Molmasse zwischen 20.000 und 40.000 zugegeben werden. Das Reaktionsprodukt kann aber auch direkt, in schmelzflüssiger Phase, mit weiterer Polyesterschmelze desselben oder anderen Ursprungs vermischt werden, um daraus Produkte mit reduziertem AA herzustellen.

Die erfindungsgemäßen Acetaldehyd-bindenden Zusatzstoffe verursachen eine schwächere oder stärkere Gelbfärbung des Polyesters und der daraus hergestellten Flaschen, Behälter oder Folien. Durch den bevorzugten Zusatz von blauen und roten, in der Schmelze löslichen Farbstoffen in sehr geringer Konzentration zu der Polyesterschmelze, kann dem Endprodukt eine neutrale oder leicht bläuliche Tönung verliehen werden. Dadurch kann der durch die erfindungsgemäßen Acetaldehyd-bindenden Zusätze verursachten Gelbstich kompensiert werden oder eine gewünschte Farbtönung eingestellt werden.

Als Farbstoffe eignen sich solche aus der Gruppe der Anthrachinone, z.B. aus der Estofil-Reihe S, insbesondere die Typen Estofil blue S-RLS und Estofil red S-FBL. Konzentrationen unter 5 ppm, vorzugsweise unter 2 ppm, haben sich als ausreichend erwiesen, um einen neutralen oder leicht bläulichen Farbton einzustellen. Diese Farbstoffe können als stark verdünnte Suspension in Ethylenglykol während des Polykondensationsprozesses, vorzugsweise nach Abschluß der Veresterung oder Umesterung, zugesetzt werden.

Mit Hilfe des erfindungsgemäßen Verfahrens wird die Herstellung eines Granulats mit deutlich geringerer Kristallinität ermöglicht. Während Granulat, das aus der Festphasennachkondensation stammt, eine Kristallinität von 50-60 %, gemessen über die Granulatdichte, aufweist, hat Granulat nach dem erfindungsgemäßen Verfahren nur einen kristallinen Anteil um 40 %. Um vollständiges Aufschmelzen in der Plastifizierschnekke einer Spritzgußmaschine zu erreichen, können niedrigere Temperaturen als bei Granulat aus der Festphasennachpolykondensation angewendet werden. Das wirkt sich in Form von geringerer Acetaldehyd-Neubildung aus.

Das erfindungsgemäße Verfahren eröffnet einen Weg, Polyesterschmelzen direkt - ohne dazwischenliegende Granulierung und Kristallisation - in eine Spritzgußmaschine zu führen und zu Vorformlingen zu verarbeiten, wie es z.B. in der DE 195 05 680 beschrieben wurde. Dabei kann nach dem erfindungsgemäßen Verfahren auf den dort benutzten Extruder verzichtet werden. Dies bedeutet einen erheblichen Kostenvorteil, da diese Extruder kostenintensiv sind und nur bis zu begrenzten Kapazitäten gebaut werden können.

Als wesentlich hat sich eine intensive Vermischung des Acetaldehyd-Blockers und des Inhibitors für den Katalysator mit der Polyesterschmelze erwiesen. Hierzu eignet sich ein Doppelschneckenextruder, dem die Polyesterschmelze zugeführt wird und in dessen Einzugsbereich das Additiv entweder flüssig (geschmolzen) oder fest (als Granulat oder Pulver mit einer mittleren Korngröße < 0,1 mm) eindosiert wird. Der Doppelschneckenextruder verfügt über eine Entgasungszone, in der durch ein angelegtes Vakuum niedermolekulare Spaltprodukte der chemischen Reaktion zwischen den Additiven und dem Polyester durch Verdampfen aus der Schmelze abgetrennt werden. Im Falle des Acetaldehyd reduzierenden Additivs handelt es sich meist um Wasser, das ohne diese Separationsmöglichkeit zu einem je nach zugegebener Menge des Additivs kleineren oder größeren hydrolytischen Abbau des Polyesters führen würde.

Erfindungsgemäß wird aus dem Schmelzestrom ein Teilstrom abgezweigt und durch einen Doppelschneckenextruder geführt. In diesem werden die Additive eindosiert und intensiv in den Teilstrom eingemischt. Nach der Entgasung wird der Teilstrom wieder mit dem Hauptstrom vereinigt. Abschließend wird dieser intensiv gemischt und homogenisiert. Dies kann in einem statischen oder dynamischen Mischer erfolgen. Dieses System hat den Vorteil, daß bei großen Anlagenleistungen der teuere Doppelschnekkenextruder nicht für den gesamten Schmelzestrom, sondern nur für einen Teilstrom dimensioniert werden kann, der typischerweise etwa 10 % des Gesamtstroms umfaßt. Die dann noch notwendige Kombination mit einem statischen oder dynamischen Mischer zur Vermischung von Teil- und Hauptstrom verursacht weniger Investitionskosten als ein für den gesamten Strom ausgelegter Doppelschneckenextruder.

Bevorzugt wird das Verfahren durchgeführt, indem die Endstufe der Polykondensation in einem Reaktor mit einem Rotor, der als ein mit Durchbrechungen versehener Hohlzylinder ausgebildet ist und auf dem ringförmige Scheiben zur Ausbildung eines Schmelzfilms und Förderung der Polymerschmelze befestigt sind, durchgeführt. Dieser Reaktortyp wird in der EP 0 719 582 näher beschrieben.

Das Verfahren wird zur Herstellung von Verpackungen für Nahrungsmittel und Getränke eingesetzt. Bevorzugt ist dabei die Herstellung von Getränkeflaschen und von Verpackungsfolien.

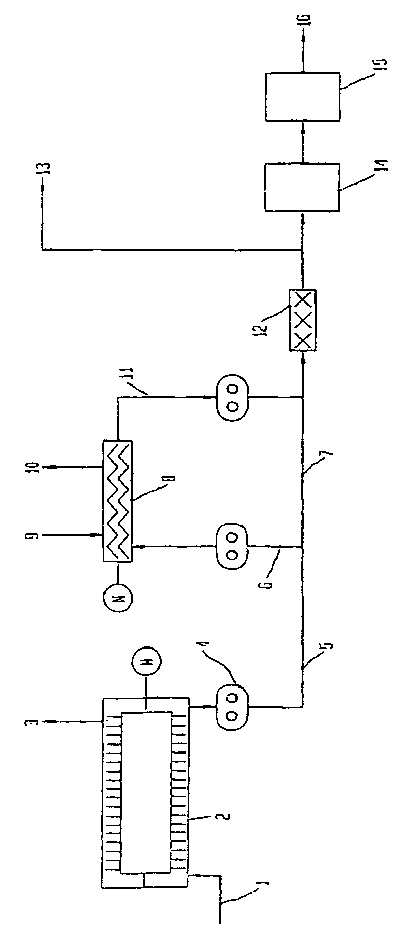

Die Erfindung wird nachfolgend anhand von Fig. 1 und den nachfolgenden Ausführungsbeispielen näher erläutert.

Polyester wird in einem kontinuierlichen Prozess durch Veresterung von Terephthalsäure (TPA) mit Ethylenglykol (EG) hergestellt. Aus 98 mol% TPA und 2 mol% Isophthalsäure (IPA) wird mit der 1,15fachen molaren Menge Ethylenglykol, bezogen auf die Summe aus PTA und IPA, eine Paste angerührt. Die Paste wird einem Veresterungsreaktor zugeführt, in dem bei einem Druck von 2,2 bar (absolut) und einer Temperatur von 265 °C innerhalb einer Verweilzeit von 90 Minuten ein Veresterungsumsatz von mehr als 90 % erreicht wird. Der Reaktor ist mit einer Rektifikationskolonne verbunden, in der die während der Veresterungsreaktion entstehenden Dämpfe in Wasser und Ethylenglykol getrennt werden, wobei das EG in den Reaktor zurückkehrt und das Wasser den Prozess verlässt.

Das Produkt des 1. Veresterungsreaktors gelangt in einen 2. Reaktor, wo die Veresterung soweit vorangetrieben wird, dass die Konzentration der Carboxylendgruppen weniger als 250 mmol/kg und der Polykondensationsgrad mehr als 6 beträgt. In diesen Reaktor wird als Katalysator Tetrabutyltitanat in Form einer 1 %igen Lösung in Ethylenglykol eingespeist und vermischt. Die Menge des Katalysators beträgt 0,04 mmol/mol Dicarbonsäure. Der Druck in diesem Reaktor ist Umgebungsdruck, die Temperatur beträgt 270 °C, die Verweilzeit ist etwa 1 Stunde. Zusätzlich wird eine Menge von 1,2 ppm, bezogen auf die Masse des Polyesters eines in Poylester löslichen, hitzestabilen blauen Anthrachinon-Farbstoffs, suspendiert in EG eingespeist und mit der Schmelze vermischt.

Die folgende Vorkondensation findet bei einem Vakuum von 30 mbar, einer Temperatur von 270 °C innerhalb einer weiteren Stunde statt. Der Polykondensationsgrad steigt dabei auf 30, und die Carboxylendgruppen gehen auf etwa 70 mmol/kg zurück. Die weitern Verfahrensschritte sind in Fig. 1 dargestellt.

Dieses Vorkondensat (1) geht in die Endstufe der Polykondensation (2) in einem Reaktor mit horizontalem Korbrührer der Bauart "DISCAGE-C" der Firma INVENTA-FISCHER. In diesem Reaktor steigt die Temperatur der Schmelze von 270 °C am Einlass allmählich bis auf 275 °C am Auslass. Die Verweilzeit beträgt 120 Minuten, das Vakuum (3) wird bei 0,7 mbar im Mittel so geregelt, dass die on-line nach dem Reaktor mit einem Kapillarviskosimeter gemessene Schmelzeviskosität konstant bleibt und die intrinsische Viskosität (IV) 0,85 beträgt.

Die Dämpfe aus dem Vorkondensations- und Polykondensationsreaktor werden in Sprühkondensatoren der Bauart INVENTA-FISCHER mit gekühltem EG kondensiert und die Restgase mit Hilfe von vierstufigen Dampfstrahl-Vakuumpumpen abgesaugt.

Der Schmelzestrom wird mit einer Zahnradpumpe (4) aus dem Endreaktor abgezogen und, ggf. nach Passieren eines Schmelzefilters mit kontinuierlichem Siebwechsler, in zwei Teilströme (6 und 7) aufgeteilt. Die Aufteilung erfolgt in der Weise, dass 10 % des Gesamtstroms (5) durch einen Doppelschneckenextruder (8) gefahren werden. Im Doppelschneckenextruder wird der Polyesterschmelze 5 % Terephthalsäure-di(4-Aminomethylbenzylamid) in geschmolzener Form zugesetzt (9) und intensiv gemischt. Gleichzeitig, jedoch an einer anderen Einspeisestelle, wird der Schmelze im Doppelschneckenextruder Triethylphosphat (flüssig) in reiner Form zugeführt, wobei die Menge 0,06 mmol/mol Dicarbonsäure beträgt. Niedermolekulare Spaltprodukte, die durch chemische Reaktion der zugegebenen Substanzen mit der Polyesterschmelze entstehen, werden mit Hilfe von Vakuum durch einen Entgasungsstutzen (10) aus der Schmelze entfernt. Nach Verlassen des Extruders wird dieser Schmelzestrom (11) mit dem Hauptstrom (7) vereinigt. Der vereinigte Strom wird in einem statischen Mischer vom Typ Kenics (12) homogenisiert und einer Granuliereinrichtung (14) zugeführt. Die Verweilzeit der Schmelze zwischen der Austragspumpe des Finishers und der Granuliereinrichtung wird durch geeignete Dimensionierung der Leitungen auf unter 20 Minuten begrenzt. Das Granulat hat einen Gehalt an freiem AA von 3 ppm, gemessen mit Headspace-Gaschromatographie.

Das amorphe Granulat geht in einen kontinuierlichen Kristallisator (15), z.B. in EP 0 5 975 155 beschrieben, mit einer mittleren Verweilzeit von 20 Minuten, wo es unter intensiver Bewegung auf 170 °C erwärmt wird und in den semikristallinen Zustand übergeht. Nach einer Kühlung auf unter 60 °C ist das Granulat (16) fertig zur Verpackung, Lagerung oder Transport. kung, Lagerung oder Transport.

Die nach dem statischen Mischer vorliegende Schmelze kann auch direkt (13), über ein Schmelzeverteilersystem, in parallel betriebene Spritzgussmaschinen eingespeist und zu Flaschenvorformlingen verarbeitet werden.

Zur Herstellung von Vorformlingen für Getränkeflaschen wird das Granulat einem kontinuierlichen Polyester-Trockner zugeführt, Bauart z.B. INVENTA-FISCHER. Im Wanderbett, das mit getrockneter Luft von 160 °C und einem Taupunkt von -30 °C im Gegenstrom durchströmt ist, wird das Granulat auf diese Temperatur erwärmt und innerhalb von einer Durchlaufzeit von 5 Stunden auf weniger als 50 ppm Restfeuchte getrocknet. Das trockene Granulat fließt der Plastifizierschnecke einer Spritzgussmaschine zu, wo es zu einer Schmelze von 275 °C verarbeitet wird. Die Schmelze wird von der Maschine portionsweise über ein Kanalsystem in eine gekühlte Form mit 96 Kavitäten gedrückt. Nach kurzem Abkühlen wird die Form geöffnet und die fertigen Vorformlinge ausgestoßen. Die Zykluszeit des Vorgangs beträgt 15 Sekunden. Der Acetaldehyd-Gehalt in der Wand des Vorformlings beträgt im Mittel 5 ppm, gemessen durch Headspace-Gaschromatographie am gemahlenen und homogenisierten Vorformling.
Die Beispiele 1 bis 4 sind illustrativ.

### Beispiel 1

990 g Polyethylenterephthalat-Granulat, bestehend aus 99 Mol% Terephthalsäure, 1 Mol% Isophthalsäure und Ethylenglykol, mit einer intrinsischen Viskosität IV = 0,8 und das einen Gehalt von 40 ppm freien Acetaldehyd aufweist, werden mit 10 g Terephthalsäuredi(4-Aminomethylbenzylamid) vermischt und in einem 2-Wellenextruder bei einer Temperatur von 270-280 °C aufgeschmolzen, in der Schmelze vermischt, zu einem Strang extrudiert und regranuliert. Das Granulat enthält 0,5 ppm freien Acetaldehyd.

### Beispiel 2

900 g Polyethylenterephthalat wie in Beispiel 1 werden mit 100 g Terephthalsäure- di(4-Aminomethlybenzylamid) in einem Extruder vermischt und zu einem Strang extrudiert und granuliert.

### Beispiel 3

900 g PET wie in Beispiel 1 werden mit 100 g PET-Granulat, hergestellt nach Beispiel 2, vermischt und in einem Extruder aufgeschmolzen, vermischt, extrudiert und regranuliert. Das Granulat enthält 1,0 ppm freien Acetaldehyd.

### Beispiel 4

990 g PET-Granulat wie in Beispiel 1 werden mit 10 g Adipinsäure- di(4Aminomethylbenzylamid) vermischt und in einem Extruder wie in Beispiel 1 aufgeschmolzen, vermischt, extrudiert und regranuliert. Das Granulat enthält 0,6 ppm freien Acetaldehyd.

### Beispiel 5

In einer kontinuierlichen Anlage zur Herstellung von Polyethylenterephthalat wird ein Schmelzestrom aus dem Finisher erhalten, in dem das PET eine mittlere Molekülmasse von 30.000 g/mol aufweist und einen Gehalt an freiem Acetaldehyd von 45 ppm. Der Schmelzestrom wird in der Weise geteilt, dass 1/10 des Gesamtstroms abgezweigt wird und durch einen Zweischneckenextruder geleitet wird. In dem Extruder wird die PET-Schmelze mit 10 % Terephthalsäure- di(4-Aminomethylbenzylamid) vermischt. Anschließend werden die Schmelzeströme 1 und 2 wieder vereinigt, in einem statischen Mischer vermischt und einer Granuliereinrichtung zugeführt. Das Granulat weist einen Gehalt an freiem Acetaldehyd von 1,5 ppm auf.

Das Granulat wird auf 50 ppm Restfeuchte getrocknet und in einer Spritzgussmaschine aufgeschmolzen und zu Vorformlingen verformt. Der Acetaldehydgehalt in der Wand des Vorformlings beträgt im Mittel 4 ppm.

**Tab. 1**

| **Dicarbonsäurekomponente** | **Diaminkomponente** |
|---|---|
| Terephthalsäure | 1,3-Bis-(aminomethyl)-benzol |
| Terephthalsäure und Adipinsäure | Hexamethylendiamin |
| Terephthalsäure und Adipinsäure | Hexamethylendiamin und 1,3-Bis-(aminomethyl)-benzol |

## Patentansprüche

1. Verfahren zur Herstellung von Polyestern mit reduziertem Gehalt an freiem Acetaldehyd aus Terephthalsäure und Ethylenglykol über eine katalysierte Polykondensation in der Schmelze, bei dem
a) der Katalysator vor der Polykondensation zugesetzt wird,
b) nach Erreichen einer intrinsischen Viskosität (IV) der Schmelze zwischen 0,63 und 1,00, die ohne Festphasennachkondensation erreicht wird, ein Inhibitor zur Desaktivierung des Katalysators zugesetzt wird und
c) anschließend ein Überschuß einer den freien Acetaldehyd bindenden Substanz zugesetzt wird, so dass auch nachträglich freigesetzter Acetaldehyd gebunden wird.
wobei während des gesamten Ablaufs der Polykondensation eine Temperatur unterhalb von 280 °C eingehalten wird und in den Schritten b) und c) aus einem aus einer kontinuierlichen Polykondensation stammenden Schmelzestrom ein Teilstrom der Schmelze abgezweigt wird, in den in einem Extruder mit Entgasungsmöglichkeit die Zusatzstoffe dosiert und vermischt werden, wobei die niedermolekularen Abbauprodukte durch ein Vakuum aus der Schmelze entfernt werden, und der Teilstrom anschließend wieder mit dem Hauptstrom der Schmelze vereint und intensiv vermischt wird.

2. Verfahren nach Anspruch 1, **dadurch gekennzeichnet, dass** die Polykondensation bei einer Temperatur unterhalb 275 °C durchgeführt wird.

3. Verfahren nach mindestens einem der vorhergehenden Ansprüche, **dadurch gekennzeichnet, dass** in Schritt b) bei einer intrinsischen Viskosität (IV) zwischen 0,73 und 0,92 der Inhibitor zugesetzt wird.

4. Verfahren nach mindestens einem der vorhergehenden Ansprüche, **dadurch gekennzeichnet, dass** neben Terephthalsäure eine weitere Dicarbonsäure, wie z.B. Isophthalsäure oder Aidpinsäure, in einer Konzentration bis zu 10 Mol-% zugesetzt wird.

5. Verfahren nach mindestens einem der vorhergehenden Ansprüche, **dadurch gekennzeichnet, dass** neben Ethylenglykol weitere Alkandiole und/oder Polyole in einer Konzentration bis zu 5 Mol-% zugesetzt werden.

6. Verfahren nach mindestens einem der vorhergehenden Ansprüche, **dadurch gekennzeichnet, dass** in Schritt a) die Konzentration des Katalysators weniger als 0,1 mmol/mol Dicarbonsäure beträgt.

7. Verfahren nach mindestens einem der vorhergehenden Ansprüche, **dadurch gekennzeichnet, dass** in Schritt a) die Konzentration des Katalysators weniger als 0,05 mmol/mol Dicarbonsäure beträgt.

8. Verfahren nach mindestens einem der vorhergehenden Ansprüche, **dadurch gekennzeichnet, dass** in Schritt a) ein titanhaltiger Katalysator eingesetzt wird.

9. Verfahren nach mindestens einem der vorhergehenden Ansprüche, **dadurch gekennzeichnet, dass** in Schritt a) eine organische Ti(IV)-Verbindung eingesetzt wird.

10. Verfahren nach mindestens einem der vorhergehenden Ansprüche, **dadurch gekennzeichnet, dass** in Schritt b) ein phosphorhaltiger Inhibitor eingesetzt wird.

11. Verfahren nach mindestens einem der vorhergehenden Ansprüche, **dadurch gekennzeichnet, dass** in Schritt b) eine organische Phosphorverbindung eingesetzt wird.

12. Verfahren nach mindestens einem der vorhergehenden Ansprüche, **dadurch gekennzeichnet, dass** in Schritt b) Trimethyl- oder Triethylphosphat eingesetzt wird.

13. Verfahren nach mindestens einem der vorhergehenden Ansprüche, **dadurch gekennzeichnet, dass** in Schritt b) die Konzentration der organischen Phosphorverbindung mindestens 1 mol/mol Titan beträgt.

14. Verfahren nach mindestens einem der vorhergehenden Ansprüche, **dadurch gekennzeichnet, dass** die organische Phosphorverbindung zusammen mit dem Acetaldehyd bindenden Zusatzstoff der Schmelze zugemischt wird.

15. Verfahren nach mindestens einem der vorhergehenden Ansprüche, **dadurch gekennzeichnet, dass** in Schritt c) das Amid aus einer Polycarbonsäure und einem mehrwertigen Amin, enthaltend mindestens zwei freie Aminfunktionen, eingesetzt wird.

16. Verfahren nach mindestens einem der vorhergehenden Ansprüche, **dadurch gekennzeichnet, dass** in Schritt c) das Amid aus einer Dicarbonsäure und einem Diamin eingesetzt wird.

17. Verfahren nach mindestens einem der vorhergehenden Ansprüche, **dadurch gekennzeichnet, dass** in Schritt c) das Amid eine mittlere Molekülmasse unter 2000 aufweist.

18. Verfahren nach mindestens einem der vorhergehenden Ansprüche, **dadurch gekennzeichnet, dass** in Schritt c) das Amid in einer Konzentration von weniger als 1 Masse-% eingesetzt wird.

19. Verfahren nach mindestens einem der vorhergehenden Ansprüche, **dadurch gekennzeichnet, dass** in Schritt c) als Dicarbonsäuren Terephthalsäure und/oder Adipinsäure sowie als Diamin Hexamethylendiamin und/oder 1,3-Bis-(aminomethyl)-benzol eingesetzt wird.

20. Verfahren nach mindestens einem der vorhergehenden Ansprüche, **dadurch gekennzeichnet, dass** in Schritt c) als Dicarbonsäure Terephthalsäure sowie als Diamin 1,3-Bis-(aminomethyl)-benzol eingesetzt wird.

21. Verfahren nach mindestens einem der vorhergehenden Ansprüche, **dadurch gekennzeichnet, dass** in Schritt c) lediglich ein Diamin, wie z.B. Hexamethylendiamin oder 1,3-Bis-(aminomethyl)-benzol zugesetzt wird, das mit den in der Polyesterschmelze vorliegenden Dicarbonsäuren Amide bildet.

22. Verfahren nach mindestens einem der vorhergehenden Ansprüche, **dadurch gekennzeichnet, dass** während oder nach der Polykondensation ein im Polyester löslicher Farbstoff zur Korrektur der Farbe des Endproduktes zugesetzt wird.

23. Verfahren nach mindestens einem der vorhergehenden Ansprüche, **dadurch gekennzeichnet, dass** während oder nach der Polykondensation Farbstoffe aus der Gruppe der Antrachinone zugesetzt werden.

24. Verfahren nach mindestens einem der vorhergehenden Ansprüche, **dadurch gekennzeichnet, dass** der Farbstoff in einer Konzentration unter 5 ppm zugesetzt wird.

25. Verfahren nach mindestens einem der vorhergehenden Ansprüche, **dadurch gekennzeichnet, dass** die Polyesterschmelze nach der Polykondensation und nach Einmischen aller Zusatzstoffe granuliert wird und das amorphe Granulat kristallisiert wird.

26. Verfahren nach mindestens einem der vorhergehenden Ansprüche, **dadurch gekennzeichnet, dass** der kristalline Anteil des Granulats weniger als 40 %, gemessen über die Dichte, beträgt.

27. Verfahren nach mindestens einem der vorhergehenden Ansprüche, **dadurch gekennzeichnet, dass** die Polyesterschmelze nach der Polykondensation und nach Einmischen der Zusatzstoffe direkt Spritzgussmaschinen zur Herstellung von Vorformlingen zugeführt wird.

28. Verfahren nach mindestens einem der vorhergehenden Ansprüche, **dadurch gekennzeichnet, dass** die Endstufe der Polykondensation in einem Reaktor mit einem Rotor, der als ein mit Durchbrechungen versehener Hohlzylinder ausgebildet ist und auf dem ringförmige Scheiben zur Ausbildung eines Schmelzefilms und zur Förderung der Polymerschmelze befestigt sind, durchgeführt wird.

29. Verwendung des Verfahrens nach mindestens einem der vorhergehenden Ansprüche zur Herstellung von Verpackungen für Nahrungsmittel und Getränke.

30. Verwendung des Verfahrens nach mindestens einem der Ansprüche 1 bis 28 zur Herstellung von Getränkeflaschen.

31. Verwendung des Verfahrens nach mindestens einem der Ansprüche 1 bis 28 zur Herstellung von Verpackungsfolien.

## Claims

1. Process for the preparation of polyesters with reduced content of free acetaldehyde of terephthalic aicd and ethylene glycol via a catalysed polycondensation in the melt, where
a) the catalyst is added prior to polycondensation;
b) after having arrived at an intrinsic viscosity (IV) of the melt between 0.63 and 1.00, which is achieved without final solid condensation, an inhibitor is added for deactivation of the catalyst; and
c) subsequently a surplus of a substance which bonds the free acetaldehyde is added so that even subsequently released acetaldehyde is bonded;
and during the entire course of polycondensation a temperature below 280°C is maintained and in steps b) and c) from a melt flow originating from a continuous polycondensation is branched off a flow portion of the melt wherein the additives are apportioned and mixed in an extruder which allows degassing, and low-molecular decomposition products are removed from the melt by a vacuum, ant the flow portion is subsequently rejoined with the main flow ofthe melt and intensively mixed.

2. Process according to Claim 1,
**characterized in that**
the polycondensation is performed at a temperature below 275°C.

3. Process according to at least one of the above claims,
**characterized in that**
the inhibitor is added in step b) at an intrinsic viscosity (IV) between 0.73 and 0.92.

4. Process according to at least one of the above claims,
**characterized in that**
in addition to terephthalic acid a further dicarbolic acid, for example isophthalic acid or aidpin acid, is added at a concentration of up to 10 Mol-%.

5. Process according to at least one of the above claims,
**characterized in that**
in addition of ethylene glycol further alkandioles and/or polyoles are added at a concentration of up to 5 Mol-%.

6. Process according to at least one of the above claims,
**characterized in that**
in step a) the concentration of the catalyst lies below 0.1 mmol/mol dicarboxylic acid.

7. Process according to at least one of the above claims,
**characterized in that**
in step a) the concentration of the catalyst lies below 0.05 mmol/mol dicarboxylic acid.

8. Process according to at least one of the above claims,
**characterized in that**
in step a) a titanium containing catalyst is used.

9. Process according to at least one of the above claims,
**characterized in that**
in step a) an organic Ti(IV) compound is used.

10. Process according to at least one of the above claims,
**characterized in that**
In step b) a phosphorous inhibitor is used.

11. Process according to at least one of the above claims,
**characterized in that**
in step b) an organic phosphorous compound is used.

12. Process according to at least one of the above claims,
**characterized in that**
in step b) trimethyl or triethyl phosphate is used.

13. Process according to at least one of the above claims,
**characterized in that**
in step b) the concentration ofthe organic phosphorous compound is at least 1 mol/mol titanium.

14. Process according to at least one of the above claims,
**characterized in that**
the organic phosphorous compound is mixed into the melt together with the acetaldehyde bonding additive.

15. Process according to at least one of the above claims,
**characterized in that**
in step c) the amide of a polycarboxylic acid and a multivalent amine containing at least two free amine functions is used.

16. Process according to at least one of the above claims,
**characterised in that**
in step c) the amide of a dicarboxylic acid and a diamine is used.

17. Process according to at least one of the above claims,
**characterised in that**
in step c) the amide has a mean molecular mass below 2,000,

18. Process according to at least one of the above claims,
**characterised in that**
in step c) the amide is used at a concentration of less than 1 mass-%.

19. Process according to at least one of the above claims,
**characterised in that**
in step c) terephthalic acid and/or adipinic acid are used as dicarboxylic acids, and hexamethylene diamine and/or 1,3l-Bis-(aminomethyl)-benzol as diamine.

20. Process according to at least one of the above claims,
**characterised in that**
in step c) terephthalic acid is used as dicarboxylic acid and 1.3l-Bis-(aminomethyl)-benzol as diamine.

21. Process according to at least one of the above claims,
**characterised in that**
in step c) only one diamine, for example hexamethylene diamine or 1.3-Bis-(aminomethyl)-benzol, is added which together with dicarboxylic acids, which are present in the polyester melt, from amides.

22. Process according to at least one of the above claims,
**characterised in that**
during or after polycondensation a dye which is dissolvable in the polyester is used for correction of the colour of the end product.

23. Process according to at least one of the above claims,
**characterised in that**
during or after polycondensation dyes of the group of antrachinone are added.

24. Process according to at least one of the above claims,
**characterised in that** the dye is added at a concentration below 5 ppm.

25. Process according to at least one of the above claims,
**characterised in that**
the polyester melt is after polycondensation and mixing in of all additives granulated, and the amorphous granulate is crystallised.

26. Process according to at least one of the above claims,
**characterised in that**
the crystalline portion of the granulate is less than 40 %, measured over the density.

27. Process according to at least one of the above claims,
**characterised in that**
the polyester melt is after polycondensation and mixing in of the additives directly delivered to injection moulding machines for the purpose of producing pre-moulds.

28. Process according to at least one ofthe above claims,
**characterised in that**
the end stage of polycondensation is carried out in a reactor with a rotor designed as a hollow cylinder with berak-throughs and on which circular plates are fitted for developing a melt film and for promoting the polymer melt.

29. Use ofthe process according to at least one of the above claims for producing packaging for foodstuffs and drinks.

30. Use of the process according to at least one of Claims 1 to 28 for producing drink bottles.

31. Use of the process according to at least one of Claims 1 to 28, for producing packaging foils.

## Revendications

1. Procédé pour la préparation de polyester à teneur réduite en adétaldéhyde libre, à partir d'acide téréphtalique et d'éthylèneglycol par une polycondensation catalysée en masse fondue, dans lequel
a) le catalyseur est ajouté avant la polycondensation,
b) une fois atteinte une viscosité intrinsèque (VI) de la masse fondue comprise entre 0,63 et 1,00, qui est atteinte sans post-condensation de la phase solide, on ajoute un inhibiteur pour l'inactivation du catalyseur et
c) on ajoute ensuite un excès d'une substance fixant l'acétaldéhyde libre, de manière que l'acétaldéhyde libéré ultérieurement soit lui aussi fixé,
en maintenant pendant tout le déroulement de la polycondensation une température inférieure à 280°C et Dans les étapes b) et c), on dérive d'un courant de masse fondue provenant d'une polycondensation continue un courant partiel de la masse fondue dans lequel sont dosés et mélangés les additifs, dans une extrudeuse à possibilité de dégazage, les produits de dégradation de faible masse moléculaire étant éliminés de la masse fondue au moyen d'un vide, et le courant partiel est ensuite de nouveau réuni et mélangé intensivement avec le courant principal de la masse fondue.

2. Procédé selon la revendication 1, **caractérisé en ce que** la polymérisation est effectuée à une température inférieure à 275°C.

3. Procédé selon au moins l'une des revendications précédentes, **caractérisé en ce que** dans l'étape b) on ajoute l'inhibiteur à une viscosité intrinsèque (VI) comprise entre 0,73 et 0,92.

4. Procédé selon au moins l'une des revendications précédentes, **caractérisé en ce que**, en plus d'acide téréphtalique, on ajoute un autre acide dicaboxylique, comme par exemple l'acide isophtalique ou l'acide adipique, à une concentration allant jusqu'à 10 % en moles.

5. Procédé selon au moins l'une des revendications précédentes, **caractérisé en ce que**, en plus d'éthylèneglycol, on ajoute d'autres alcanediols et/ou polyols à une concentration allant jusqu'à 5 % en moles.

6. Procédé selon au moins l'une des revendications précédentes, **caractérisé en ce que**, dans l'étape a), la concentration du catalyseur est inférieure à 0,1 mole par mole d'acide dicarboxylique.

7. Procédé selon au moins l'une des revendications précédentes, **caractérisé en ce que**, dans l'étape a), la concentration du catalyseur est inférieure à 0,005 mole par mole d'acide dixarboxylique.

8. Procédé selon au moins l'une des revendications précédentes, **caractérisé en ce que**, dans l'étape a), on utilise un catalyseur contenant du titane.

9. Procédé selon au moins l'une des revendications précédentes, **caractérisé en ce que**, dans l'étape a), on utilise un composé organique contenant du Ti-(IV).

10. Procédé selon au moins l'une des revendications précédentes, **caractérisé en ce que**, dans l'étape b), on utilise un inhibiteur phosphoré.

11. Procédé selon au moins l'une des revendications précédentes, **caractérisé en ce que**, dans l'étape b), on utilise un composé phosphoré organique.

12. Procédé selon au moins l'une des revendications précédentes, **caractérisé en ce que**, dans l'étape b), on utilise du phosphate de triméthyle ou de triéthyle.

13. Procédé selon au moins l'une des revendications précédentes, **caractérisé en ce que**, dans l'étape b), la concentration du composé phosphoré organique est d'au moins 1 mole par mole de titane.

14. Procédé selon au moins l'une des revendications précédentes, **caractérisé en ce que** le composé phosphoré organique est ajouté conjointement avec l'additif fixant l'acétaldéhyde à la masse fondue.

15. Procédé selon au moins l'une des revendications précédentes, **caractérisé en ce que**, dans l'étape c), on utilise l'amide à base d'un acide polycarboxylique et d'une amine polyfonctionnelle contenant au moins deux fonctions amino libres.

16. Procédé selon au moins l'une des revendications précédentes, **caractérisé en ce que**, dans l'étape c), on utilise l'amide à base d'un acide dicarboxylique et d'une diamine.

17. Procédé selon au moins l'une des revendications précédentes, **caractérisé en ce que**, dans l'étape c), on utilise l'amide a une masse moléculaire moyenne inférieure à 2 000.

18. Procédé selon au moins l'une des revendications précédentes, **caractérisé en ce que**, dans l'étape c), l'amide est utilise à une concentration inférieure à 1 % en masse.

19. Procédé selon au moins l'une des revendications précédentes, **caractérisé en ce que**, dans l'étape c), on utilise en tant qu'acides dicarboxyliques l'acide téréphtalique et/ou l'acide adipique ainsi qu'en tant que diamine l'hexaméthylènediamine et/ou le 1,3-bis(aminométhyl)benzène.

20. Procédé selon au moins l'une des revendications précédentes, **caractérisé en ce que**, dans l'étape c9), on utilise en tant qu'acides dixarboxylique l'acide téréohtalique ainsi qu'en tant que diamine le 1,3-bis-aminométhyl)benzène.

21. Procédé selon au moins l'une des revendications précédentes, **caractérisé en ce que**, dans l'étape c), on ajoute seulement une diamine, comme par exemple l'hexaméthylènediamine ou le 1,3bis-(aminométhyl)benzène, qui forme des amides avec les acides dicarboxyliques présents dans la masse fondue de polyester.

22. Procédé selon au moins l'une des revendications précédentes, **caractérisé en ce que**, pendant ou après la polycondensation, on ajoute un colorant soluble dans le polyester, pour la correction de la couleur du produit final.

23. Procédé selon au moins l'une des revendications précédentes, **caractérisé en ce que**, pendant ou après la polycondensation, on ajoute des colorants choisis dans le groupe des anthraquinones.

24. Procédé selon au moins l'une des revendications précédentes, **caractérisé en ce que** le colorant est ajouté à une concentration inférieure à 5 ppm.

25. Procédé selon au moins l'une des revendications précédentes, **caractérisé en ce que**, après la polycondensation et après incorporation de tous les additifs, la masse fondue de polyester est granulée et le produit granulé amorphe est cristallisé.

26. Procédé selon au moins l'une des revendications précédentes, **caractérisé en ce que** la fraction cristalline du produit granulé est inférieure à 40 %, mesurée par la densité.

27. Procédé selon au moins l'une des revendications précédentes, **caractérisé en ce que**, après la polycondensation et après incorporation des additifs, la masse fondue de polyester est envoyée directement à des machines de moulage par injection, pour la production d'ébauches.

28. Procédé selon au moins l'une des revendications précédentes, **caractérisé en ce que** le stade final de la polycondensation est effectué dans un réacteur muni d'un rotor que se présente sous forme d'un cylindre creux muni d'ouvertures et sur lequel sont fixés des disques circulaires pour la formation d'un film de masse fondue et pour le transport de la masse fondue de polymère.

29. Utilisation du procédé selon au moins l'une des revendications précédentes, pour la fabrication d'emballages pour produits alimentaires et boissons.

30. Utilisation du procédé selon au moins l'une des revendications 1 à 28, pour la fabrications de bouteilles pour boissons.

31. Utilisation du procédé selon au moins l'une des revendications 1 à 28, pour la fabrication de films d'emballage.
